# FASCICULE DE BREVET EUROPEEN

(11) **EP 3 262 536 B1**
(45) Date de publication et mention de la délivrance du brevet: **06.04.2022**
(21) Numéro de dépôt: 16742334.2
(22) Date de dépôt: 21.06.2016
(51) Int. Cl.: G06F 16/957, H04L 29/06, H04L 29/08

(54) **PROCÉDÉ DE TÉLÉCHARGEMENT ACCÉLÉRÉ D'UNE PAGE WEB VERS UN TERMINAL DE COMMUNICATION**
VERFAHREN ZUM BESCHLEUNIGTEN DOWNLOAD EINER WEBSEITE AN EIN KOMMUNIKATIONSENDGERÄT
METHOD FOR THE ACCELERATED DOWNLOAD OF A WEB PAGE TO A COMMUNICATION TERMINAL

(30) Priorité: 23.06.2015 FR 1555781
(43) Date de publication de la demande: 03.01.2018
(73) Titulaire: BULL SAS, 78340 Les Clayes-sous-Bois (FR)
(72) Inventeur: ATTIMONT, Luc, 92400 Courbevoie (FR)
(74) Mandataire: Novagraaf Technologies
(86) Numéro de dépôt international: PCT/FR2016/051519
(87) Numéro de publication internationale: WO 2016/207540

(56) Documents cités:
- US-A1- 2013 339 526
- US-A1- 2015 006 622
- GEN MINEKI ET AL: "SPDY accelerator for improving Web access speed", ADVANCED COMMUNICATION TECHNOLOGY (ICACT), 2013 15TH INTERNATIONAL CONFERENCE ON, IEEE, 27 janvier 2013 (2013-01-27), pages 540-544, XP032349756, ISBN: 978-1-4673-3148-7
- BELSHE TWIST R PEON GOOGLE M ET AL: "SPDY Protocol; draft-mbelshe-httpbis-spdy-00.txt", SPDY PROTOCOL; DRAFT-MBELSHE-HTTPBIS-SPDY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 February 2012 (2012-02-23), pages 1-51, XP015080780, [retrieved on 2012-02-23]

## Description

### DOMAINE DE L'INVENTION

La présente invention est relative à l'accès à un serveur web à partir d'un terminal de communication connecté à un réseau de télécommunication. Elle s'applique particulièrement à l'optimisation du téléchargement d'une page web depuis un serveur vers un terminal de communication.

### CONTEXTE DE L'INVENTION

Les terminaux de communication permettent, le plus souvent via l'utilisation d'un logiciel particulier appelé navigateur (ou « *browser* » selon la terminologie en langue anglaise), de naviguer sur l'ensemble des pages web disponibles sur le réseau Internet et hébergées sur des serveurs web. Chaque page web est associée à un identifiant permettant de la localiser. Cet identifiant est généralement appelé URL pour « *Unified Resource Locator »,* en anglais. Ces pages web sont liées entre elles sous la forme d'un hypertexte permettant ainsi une navigation simple par l'activation d'un lien hypertexte par l'utilisateur du navigateur. Le lien hypertexte contient pour se faire l'identifiant (ou URL) d'une autre page web.

D'une façon générale, les pages web sont des documents composites constitués d'un ensemble d'éléments. Ces éléments peuvent être de plusieurs natures : textes, images, vidéos, etc. et être chacun identifié par son propre identifiant. Ainsi, une page web comporte à la fois un contenu propre et des liens vers des éléments externes. Dans certaines situations, le contenu propre peut être très réduit jusqu'à ne constituer qu'un canevas dans lequel les éléments externes prennent place.

En conséquence, lorsqu'un terminal de communication télécharge une page, il doit émettre ensuite un grand nombre de requêtes afin de télécharger les éléments externes. Dans certains cas, il peut ne pas pouvoir afficher la page web avant d'avoir téléchargé ces éléments externes.

Il en résulte deux inconvénients majeurs : d'une part le téléchargement et l'affichage d'une page web sont ralentis du fait des nombreux échanges nécessaires entre le terminal de communication et le serveur web avant de pouvoir afficher entièrement la page web, et d'autre part ces échanges encombrent le réseau de communication. Ce dernier inconvénient est d'autant plus crucial lorsque le réseau de communication est un réseau de télécommunication mobile et/ou lorsque ce réseau subit une forte charge.

US2013/339526A1 enseigne un procédé pour utiliser une structure de données augmentée (cf. un filtre Bloom) représentant la disponibilité des ressources dans un cache d'un dispositif de communication.

GEN MINEKI ET AL: "SPDY accelerator for improving Web access speed", ADVANCED COMMUNICATION TECHNOLOGY (ICACT), 2013 15TH INTERNATIONAL CONFERENCE ON, IEEE, 27 janvier 2013 (2013-01-27), pages 540-544, ISBN: 978-1-4673-3148-7, divulgue un accélérateur SPDY.

BELSHE TWIST R PEON GOOGLE M ET AL: "SPDY Protocol; draft-mbelshe-httpbis-spdy-00.txt",SPDY PROTOCOL; DRAFT-MBELSHE-HTTPBIS-SPDY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 février 2012 (2012-02-23), pages 1-51, enseigne une couche supplémentaire du protocole SPDY pour le multiplexage simultané de plusieurs flux sur une seule connexion TCP.

### RESUME DE L'INVENTION

Le but de la présente invention est de fournir un procédé, un serveur web et un système palliant au moins partiellement les inconvénients précités.

A cette fin, la présente invention propose un procédé pour le téléchargement d'une page web depuis un serveur web vers un terminal de communication, comportant une première étape d'émission par le dit terminal de communication d'une requête identifiant la dite page web, ainsi qu'une seconde étape comportant
- l'analyse du modèle de ladite page web par ledit serveur web pour déterminer un ensemble d'éléments constitutifs de ladite page web ;
- en réponse à la détermination d'un élément, le déclenchement par le dit serveur de la transmission du contenu correspondant au dit élément, chaque contenu étant transmis de façon indépendante de sorte que le contenu de chaque élément dudit ensemble d'éléments constitutifs de ladite page web est transmis en parallèle par des canaux de transmissions respectifs,
dans lequel ledit terminal de communication (T) peut transmettre audit serveur web un message indiquant une information représentative d'un contenu disponible dans la mémoire dudit terminal de communication et contenant une date de son insertion dans ladite mémoire, et dans lequel ledit serveur web ne déclenche pas la transmission dudit contenu, ou interrompt son téléchargement en cours en fonction de ladite information et lorsque la date de la dernière modification dudit élément sur ledit serveur est antérieure à la date contenue dans ledit message..

Suivant des modes de réalisation préférés, l'invention comprend une ou plusieurs des caractéristiques suivantes qui peuvent être utilisées séparément ou en combinaison partielle entre elles ou en combinaison totale entre elles :
- lesdits canaux sont conformes au protocole SPDY ;
- ladite information comprend un code résultant de l'application d'une fonction de hachage sur ledit contenu.

Un autre aspect de l'invention concerne un serveur web adapté pour le téléchargement d'une page web vers un terminal de communication, comportant des premiers moyens pour la réception d'une requête identifiant ladite page web et transmise par ledit terminal de communication, ainsi que des seconds moyens utilisant un modèle de ladite page web pour déterminer un ensemble d'éléments constitutifs de ladite page web, et, en réponse à la détermination d'un élément, pour déclencher la transmission du contenu correspondant audit élément, chaque contenu étant transmis de façon indépendante par des messages de réponse dans lequel lesdits seconds moyens sont prévus pour transmettre en parallèle par des canaux de transmission réceptifs, le contenu de chaque élément du dit ensemble d'éléments constitutifs de la dite page web, ledit serveur étant en outre adapté pour, suite à la réception d'un message indiquant une information représentative d'un contenu disponible dans la mémoire dudit terminal de communication et contenant une date de son insertion dans ladite mémoire, ne pas déclencher la transmission dudit contenu, ou interrompre son téléchargement en cours en fonction de ladite information et lorsque la date modification dudit élément sur ledit serveur est antérieure à la date contenue dans ledit message.

Suivant des modes de réalisation préférés, ce serveur web selon l'invention comprend une ou plusieurs des caractéristiques suivantes qui peuvent être utilisées séparément ou en combinaison partielle entre elles ou en combinaison totale entre elles :
- ladite information comprend un code résultant de l'application d'une fonction de hachage sur ledit contenu.

Un autre aspect de l'invention concerne un système comportant au moins un terminal de communication et un serveur web (WS) tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de page web.
La figure 2 représente schématiquement un exemple d'architecture avec un serveur web et un terminal de communication, dans un scénario classique ne faisant pas appel à l'invention.
La figure 3 représente le séquencement des traitements coté terminal et coté serveur, dans un scénario classique ne faisant pas appel à l'invention.
La figure 4 représente schématiquement un exemple d'architecture avec un serveur web et un terminal de communication, selon un mode de réalisation de l'invention.
La figure 5 représente le séquencement des traitements coté terminal et coté serveur, selon un mode de réalisation de l'invention.

### DESCRIPTION DETAILLEE DE L'INVENTION

Le « web » (ou plus précisément « *world wide web* ») est un ensemble de pages et de documents rendus accessibles à des terminaux de communication par des serveurs web au travers d'un protocole de communication, typiquement le protocole HTTP (« *HyperText Transfer Protocol* »), normalisé par plusieurs RFC de l'IETF (« *Internet Engineering Task Force* »), ou ses variantes.

Grace à ce protocole, une application installée sur un terminal de communication peut télécharger une ressource donnée accessible sur un serveur web. Une ressource est en général une page, rédigée en langage HTML (« *HyperText Markup Language* » ou langage de balisage d'hypertext), mais il peut également s'agir d'un document multimédia (image, vidéo...), etc.

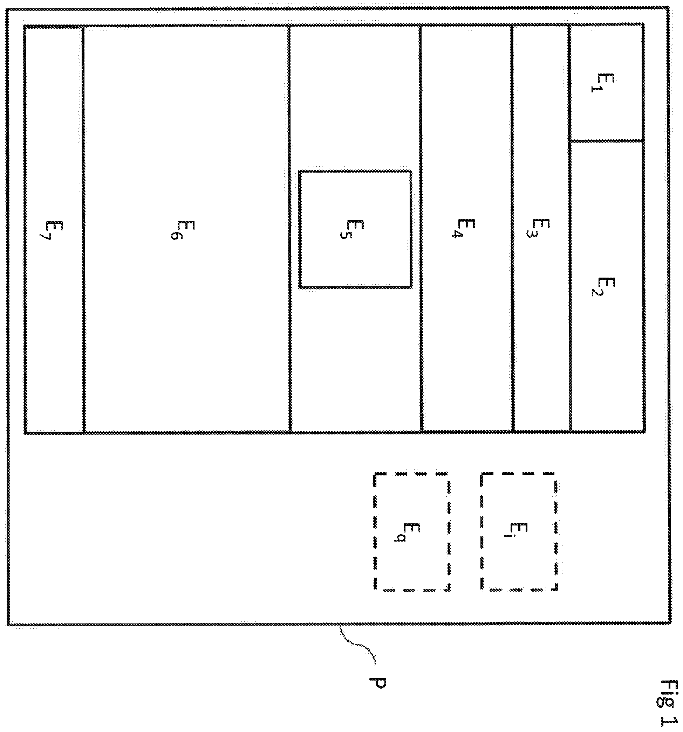

Typiquement, une page web peut être constituée d'un ensemble d'éléments E₁, E₂, ... Eᵢ. ... E_{q}, ainsi qu'illustré par la figure 1. Cette figure 1 illustre de façon schématique un exemple de page web, conformément à l'état de la technique, mais susceptible d'être traité par un procédé et un serveur web conformes à des modes de réalisation de l'invention.

Ces éléments constitutifs de la page web P peuvent être de natures différentes. Il peut s'agir d'éléments textuels, eux-mêmes rédigés en langage HTML, d'images, de vidéos, etc.

Typiquement, la page web P comprend, dans sa rédaction en langage HTML, des références à d'autres ressources qui, une fois intégrées dans la page web P, constituent ces éléments. Ainsi, elle peut comprendre le nom (et éventuellement le chemin) d'un fichier « .jpg » ou « .png » qui doit être intégré dans la page web pour former une image de cette page. De la même façon, une page web P peut contenir le nom (et éventuellement le chemin) d'un fichier « .html » ou « .htm » constituant un élément HTML de la page web.

Dans l'exemple de la figure 1, l'élément E₁ peut être un logo sous forme d'image « .png ». Un élément E₂ peut être un formulaire de recherche. Un élément E₃ peut être un menu dynamique pour naviguer dans le site web dont fait partie la page web P. Un élément E₄ peut être un ensemble de messages spécifiques à l'utilisateur du site. Un élément E₅ peut être une photographie au format « .jpg ». Un élément E₆ peut être une zone de texte. Un élément E₇ peut être un pied de page comportant de nombreux liens. Des éléments Eᵢ et E_{q} peuvent être des éléments constitutifs de la page web P, qui ne sont pas destinés à être affichés directement mais qui modifient son apparence ou son comportement dynamique, tels qu'une feuille de style au format « .css » et un script Javascript au format « .js ».

Une page web P peut être constituée d'éléments statiques et d'éléments dynamiques.

Les éléments statiques préexistent à la réception d'une requête de téléchargement de la page web P. Cela peut être des contenus fixes, qui ne sont pas modifiés au cours du temps, ou bien de façon indépendantes des requêtes transmises des terminaux de communication. Typiquement, il peut s'agir d'images, de contenus vidéo, ou de contenus textuels, rédigés en HTML. Dans l'exemple de la figure 1, l'élément E₁ est un logo, une image qui n'est pas modifiée au cours du temps.

Les éléments dynamiques sont au contraire construits lors de la réception d'une requête. Ils peuvent se baser sur des contenus préexistants, mais ils ne sont déterminés qu'au moment de la construction de la page web P. Un exemple courant d'élément dynamique est un élément dont le contenu est stocké dans une base de données, par exemple de type mySQL, et récupéré lorsque la page web est construite. Ainsi, différents mécanismes peuvent faire évoluer le contenu de la base de données, de sorte que plusieurs requêtes successives d'une même page web déclencheront le téléchargement d'un contenu différent pour l'élément constitutif concerné. Dans l'exemple de la figure 1, l'élément E₄ est un ensemble de messages spécifiques à l'utilisateur du site, et ces messages sont déterminés lors de la construction de la page web P.

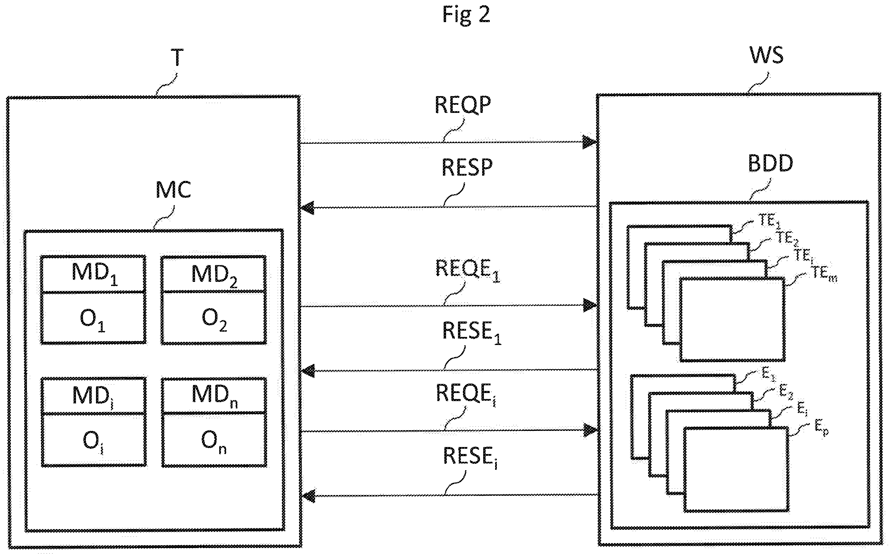

Un exemple d'échanges possibles entre un terminal de communication T et un serveur web WS est illustré par la figure 2.

Typiquement, pour obtenir le descriptif HTML de la page web P, le terminal de communication T émet une requête REQP vers le serveur WS. Cette requête REQP contient la référence de la page web P, référence appelée URL de la page web P. Le serveur WS construit le descriptif HTML de la page web P, puis le transmet à l'aide d'une réponse RESP. Le terminal de communication T analyse le descriptif HTML de la page web P, en extrait les références (URL) des éléments E₁, E₂, ... Eᵢ, ... E_{q} constituant la page web P, et pour chaque élément Eᵢ, émet une requête REQEᵢ vers le serveur WS, et attend de celui-ci une réponse RESEᵢ contenant cet élément.

Typiquement, le terminal de communication T comprend une mémoire cache MC dans laquelle il peut stocker des éléments de page web O₁...Oₙ. Lorsque le terminal de communication T a identifié les éléments E₁...E_{q} constituant la page web P, il peut interroger cette mémoire cache MC pour déterminer s'il dispose déjà de certains de ces éléments dans cette mémoire cache. Chaque élément Oᵢ est associé à des métadonnées MDᵢ permettant de l'identifier et de le décrire. Ces métadonnées comprennent par exemple :
- L'URL de l'élément,
- La date à laquelle cet élément a été reçu pour la dernière fois,
- La liste des pages web ou des domaines dont cet élément est constitutif.

À réception de la requête REQP, le serveur WS construit le descriptif HTML de la page web P. Pour ce faire, le serveur WS utilise typiquement un modèle de page web TEᵢ associé à la page web P. Ce modèle de page web, ou « *template* » selon la terminologie anglaise, est constitué d'un ou plusieurs fichiers identifiant et décrivant des éléments de contenu et de mise en forme de la page web, ainsi que des opérations à mener pour déterminer des éléments dynamiques de la page web. Ce modèle de page web, ainsi que les éléments constitutifs de la page web, sont typiquement stockés dans une base de données BDD. Cette technologie peut être utilisée par les outils de création de sites web et notamment les systèmes de gestion de contenu ou CMS (pour « *Content Management System* » en langue anglaise), tels que « WordPress » par exemple.

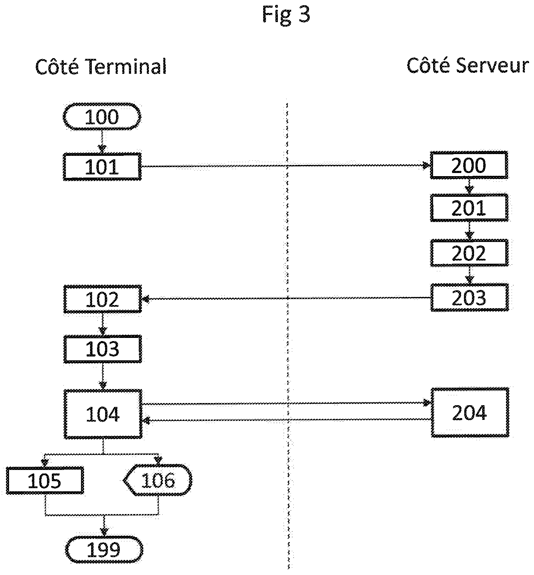

Un exemple typique d'enchainement des traitements, dans une architecture classique conforme à l'état de la technique, est illustré par la figure 3. À l'étape 100, le processus est lancé lorsque l'utilisateur du terminal de communication saisit une URL ou clique sur un lien. À l'étape 101, le terminal de communication T construit la requête correspondante REQP et l'envoie au serveur web WS à travers un réseau de télécommunication.

À l'étape 200, le serveur reçoit la requête REQP et l'analyse. À l'étape 201, le serveur extrait de la base de données le modèle TEᵢ de la page web demandée.

À l'étape 202, à l'aide du modèle TEᵢ, le serveur construit le descriptif de la page web.

À l'étape 203, le serveur sérialise la description de la page web sous la forme d'un fichier HTML, et l'envoie au terminal de communication T à travers le réseau de télécommunication au moyen du message RESP. On appelle ici « sérialiser » l'action de mettre « à plat », l'une après l'autre, un ensemble de données qui au départ sont stockées de manière structurée, par exemple dans une structure arborescente.

À l'étape 102, le terminal de communication reçoit la description HTML de la page web, la dé-sérialise et l'analyse, en extrayant de cette description la liste des références des éléments Eᵢ constitutifs de la page web.

À l'étape 103, le terminal de communication interroge sa mémoire cache et en extrait les éléments constitutifs de la page web stockés en mémoire cache, s'il y en a. Pour ce faire, le terminal de communication utilise les métadonnées MDᵢ associées à chaque élément Oᵢ stocké dans la mémoire cache, qui indiquent notamment l'URL de chaque élément.

À l'étape 104, en fonction du nombre d'éléments constitutifs de la page identifiés à l'étape 102 et du nombre d'éléments constitutifs de la page extraits de la mémoire cache à l'étape 103, le terminal de communication envoie zéro, une ou plusieurs requêtes au serveur pour obtenir les éléments manquants, et le traitement 204 du serveur lui transmet les éléments demandés.

Ces éléments une fois reçus, le terminal lance en parallèle les traitements 105 et 106. Le traitement 105 met à jour la mémoire cache avec les éléments dont il ne disposait pas déjà, ou dont il a reçu du serveur une version plus récente. Le traitement 106 consiste à afficher la page web. Lorsque ces deux traitements sont terminés, le processus s'arrête à l'étape 199.

Comme évoqué précédemment, cette exemple de déroulement montre bien le très grand nombre d'échanges entre le terminal T et le serveur web WS. L'affichage de la page web est nécessairement ralenti du fait de ces échanges qui, en outre, encombrent le réseau de communication reliant le terminal au serveur web.

L'invention vise à palier ces inconvénients.

L'invention concerne le téléchargement de ces pages web formés d'un ensemble d'éléments constitutifs vers un terminal de communication.

Le terminal de communication T peut être un ordinateur fixe ou portable, un téléphone mobile de type « smartphone », une tablette, ou tout autre dispositif permettant d'accéder au web au travers d'un réseau de télécommunication fixe ou mobile. L'invention trouve toutefois un avantage supplémentaire dans le cadre d'un réseau de communication limité en bande passante, comme il sera vu plus tard.

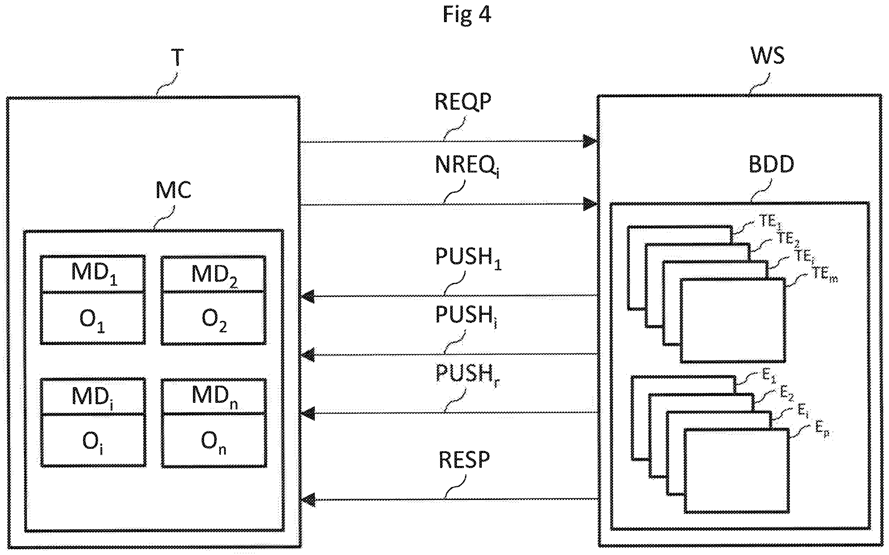

Un exemple d'échanges possibles selon l'invention entre un terminal de communication T et un serveur web WS est illustré par la figure 4.

Le terminal de communication T émet une requête REQP vers le serveur web WS. Cette requête, qui peut être conforme au protocole HTTP, identifie une page web P, notamment au moyen d'un URL.

À réception de la requête REQP, le serveur WS construit le descriptif HTML de la page web P. Pour ce faire, le serveur WS utilise typiquement un modèle de page web TEᵢ associé à la page web P. À l'aide du modèle, le serveur construit le descriptif de la page web, sérialise la description de la page web sous la forme d'un fichier HTML, et l'envoie au terminal de communication à travers le réseau de télécommunication.

Selon l'invention, le serveur web WS utilise en plus le modèle de page web TEᵢ associé à la page web P pour déterminer un ensemble d'éléments constitutifs de la page web. En reprenant l'exemple illustré par la figure 1, si la page web demandée par la requête REQP est la page web P, le serveur web WS détermine alors que les éléments constitutifs de la page web P sont les éléments E₁, E₂, ... Eᵢ, ... E_{q}.

Le serveur web WS détermine ensuite le contenu de chaque élément constitutif de la page web P. Comme il a été évoqué plus haut, certains éléments peuvent être statiques, de sorte que la détermination de leur contenu peut être immédiate : par exemple, il peut suffire d'extraire l'élément Eᵢ de la base de données BDD. D'autres contenus peuvent être dynamiques et nécessiter une ou plusieurs interrogations d'une base de données, par exemple de type MySQL, ainsi qu'un traitement d'élaboration de ce contenu à partir de données.

En conséquence, le délai peut être variable entre l'analyse de la page web P et la détermination de chacun de ses éléments constitutifs.

En réponse à la détermination d'un élément constitutif de la page web, le serveur web WS déclenche la transmission de son identifiant et de son contenu vers le terminal de communication T. Autrement dit, chaque élément constitutif est transmis de façon indépendante des autres, dès qu'il est déterminé, c'est-à-dire de façon asynchrone, au moyen des messages PUSH₁, ... PUSHᵢ, ...PUSHᵣ.

Ces messages sont typiquement conformes au protocole HTTP.

De la sorte, les éléments statiques peuvent être transmis rapidement, tandis que ceux nécessitant un traitement particulier peuvent être transmis plus tard. Ainsi, le terminal de communication T peut connaître très tôt les identifiants et les contenus d'éléments constitutifs de la page web en cours de téléchargement. Comme nous le verrons plus loin, cela peut lui permettre de déterminer qu'il dispose déjà d'un ou plusieurs de ces éléments constitutifs et d'interrompre leur téléchargement.

Selon un mode de réalisation de l'invention, le contenu de chaque élément de l'ensemble des éléments constitutifs E₁, E₂, ... Eᵢ, ... E_{q} de la page web est transmis en parallèle par des canaux de transmission respectifs.

Ces canaux peuvent par exemple être conformes au protocole SPDY ou au protocole HTTP version 2.0. SPDY est un protocole réseau expérimental fonctionnant sur la couche application, créé pour transporter du contenu Web. SPDY est une proposition, conçue par la société Google, visant à augmenter les capacités du protocole HTTP. Il vise à réduire la durée de téléchargement des pages Web en classant par ordre de priorité et en multiplexant le transfert de plusieurs fichiers ou éléments de façon à ce qu'une seule connexion soit requise. La version 2.0 du protocole HTTP est ou sera similaire au protocole SPDY.

Il est à noter que le protocole SPDY ne précise nullement comment déclencher la transmission d'un élément sur un canal multiplexé, ce qui est justement au coeur de l'invention.

Le terminal de communication T peut ainsi recevoir les éléments constitutifs de la page web P, au fur et à mesure de leur disponibilité sur le serveur web WS, et peut les recevoir avant même d'avoir reçu le descriptif HTML de la page web P. Il peut les stocker dans une mémoire cache MC, locale au terminal T.

Il en résulte plusieurs avantages :
- Le terminal de communication T peut commencer à afficher ou à préparer l'affichage d'un élément constitutif d'une page web, dès sa disponibilité. Par exemple, il peut décompresser une image, ou charger la police de caractères nécessaire à l'affichage d'un élément textuel. D'une part, cela permet à l'utilisateur d'avoir au plus tôt certains éléments affichés, et d'autre part cela évite un encombrement au sein même du terminal de communication T en utilisant les ressources de traitement et d'affichage de façon mieux répartie dans le temps.
- Il n'y a plus nécessité de séquencer la transmission des éléments d'une page au niveau du serveur web, et d'attendre l'élaboration du descriptif de la page web, la sérialisation de cette description sous la forme d'un fichier HTML, la transmission de ce fichier à travers le réseau de communication, sa dé-sérialisation et son analyse par le terminal de communication, et l'émission de requêtes par le terminal de communication, pour commencer à transmettre les autres éléments déjà disponibles. Par conséquent, le délai global de transmission d'un ensemble d'éléments constituant une page web se trouve considérablement amoindri.
- Les éléments constitutifs d'une page web peuvent être transmis sans qu'il soit nécessaire que le terminal envoie une requête pour les recevoir, ce qui économise la bande passante consommée par ces requêtes.

Selon l'invention, le terminal de communication T peut transmettre au serveur web WS un ou plusieurs messages NREQᵢ indiquant une ou plusieurs informations représentatives d'un ou plusieurs contenus disponibles dans la mémoire cache MC du terminal de communication T. Le serveur web WS ne déclenche alors pas la transmission des éléments de la page web correspondant aux contenus désignés par ces informations.

Ce mécanisme permet d'éviter la transmission des éléments de page web déjà disponibles sur le terminal de communication.

Un contenu peut être déjà disponible pour plusieurs raisons. Par exemple, si l'utilisateur du terminal de communication navigue sur un site web, il peut être amené à consulter plusieurs pages web ayant un contenu commun, par exemple un bandeau ou le logo du site web en question. Ce contenu commun est stocké dans la mémoire cache MC lors de la consultation de la première page utilisant ce contenu, et est ensuite lu à partir de cette mémoire cache MC lors de la consultation des pages suivantes qui utilisent ce contenu commun. Ce mécanisme permet ainsi de ne le télécharger qu'une fois.

De même, si l'utilisateur accède à une même page web à des dates différentes, il peut aussi réutiliser le contenu des éléments constitutifs stockés dans la mémoire cache MC du terminal de communication. Ainsi, pour une page donnée, des éléments constitutifs peuvent voir leur contenu évoluer sur le serveur web WS entre ces deux dates, tandis que d'autres éléments peuvent avoir un contenu identique sur le serveur web WS. Pour chaque élément stocké dans la mémoire cache MC et susceptible d'être constitutif de la page web, le terminal de communication peut transmettre un message NREQᵢ indiquant une information représentative du contenu de cet élément tel qu'il est mémorisé dans la mémoire cache MC du terminal de communication T.

Il est à noter que l'information est représentative du contenu de l'élément et non pas seulement de la référence de l'élément, puisqu'un même élément constitutif de la page web P peut voir son contenu évoluer au cours du temps.

L'information représentative d'un contenu peut être de différentes natures, puisqu'il peut exister de multiples façons d'identifier un contenu.

Un contenu peut être identifié dans la mémoire cache MC par des métadonnées MDᵢ comprenant par exemple l'URL de l'élément, la date à laquelle cet élément a été stocké dans la mémoire cache MC, et la liste des pages web ou des domaines dont cet élément est constitutif. Lorsque le terminal de communication T demande le téléchargement de la page web P, il peut utiliser les métadonnées MDᵢ des éléments stockés dans la mémoire cache MC pour déterminer parmi ces éléments stockés lesquels sont susceptibles d'être constitutifs de la page web P.

Ainsi, pour chaque élément Oᵢ stocké dans la mémoire cache MC qui est susceptible d'être constitutif de la page web P, le terminal de communication T peut envoyer un message NREQᵢ contenant l'URL de l'élément, et la date à laquelle cet élément a été stocké dans la mémoire cache MC. Le serveur web WS compare la date de dernière modification de l'élément sur le site web WS avec la date de stockage indiquée par le message NREQᵢ pour déterminer si le terminal T possède la dernière version du contenu de l'élément, et décide s'il doit transmettre la dernière version de l'élément à l'aide d'un message PUSHᵢ. S'il s'avère que le terminal T avait la dernière version du contenu de l'élément constitutif de la page web, le message NREQᵢ permet d'éviter l'envoi de l'élément à l'aide d'un message PUSHᵢ, ce qui économise la bande passante correspondant à cet envoi et libère cette bande passante pour la transmission des autres éléments.

Un contenu peut également être identifié par une information comprenant un code résultant de l'application d'une fonction de hachage sur le contenu en question.

La fonction de hachage a pour but de réduire le contenu lui-même à un code plus court, par exemple une vingtaine d'octets. Bien qu'il n'y ait pas de bijection, l'espace décrit par les codes possibles peut être suffisamment important pour rendre très improbable que deux contenus distincts possèdent un même code.

Il est possible que l'information transmise par un message NREQᵢ ne contienne que le code de hachage du contenu, car celui-ci peut être suffisant pour identifier le contenu de l'élément de la page web tel qu'il est stocké dans la mémoire cache MC.

Lors de la réception d'un message NREQᵢ contenant un code de hachage, le serveur web WS peut comparer ce code au code que lui-même a calculé pour le contenu de chaque élément constitutif de la page web demandée, et s'ils sont identiques pour un des éléments, ne pas télécharger à nouveau le contenu de cet élément vers le terminal de communication T. Si aucun des codes de hachage reçus par le serveur web WS ne correspond au code de hachage du contenu d'un élément de la page web demandée, c'est que le terminal de communication T ne dispose pas de cette version du contenu de l'élément, et cette version plus récente peut alors être téléchargée vers le terminal de communication T au moyen d'un message PUSHᵢ.

Selon l'invention, un téléchargement en cours pour un élément donné est interrompu suite à la réception par le serveur web WS d'un message indiquant une information représentative d'un contenu disponible dans la mémoire cache MC du terminal et correspondant à cet élément, lorsque la date de la dernière modification dudit élément sur le serveur web WS est antérieure à la date contenue dans l'information représentative reçue.

Le terminal de communication T peut ainsi interrompre un téléchargement en cours s'il dispose déjà du contenu en cours de téléchargement.

Selon un mode de réalisation, un message NREQᵢ contient les informations représentatives de plusieurs éléments stockés dans la mémoire cache MC du terminal de communication T.

Selon un mode de réalisation, les informations représentatives de plusieurs éléments stockés dans la mémoire cache MC du terminal de communication T sont transmises dans la requête REQP.

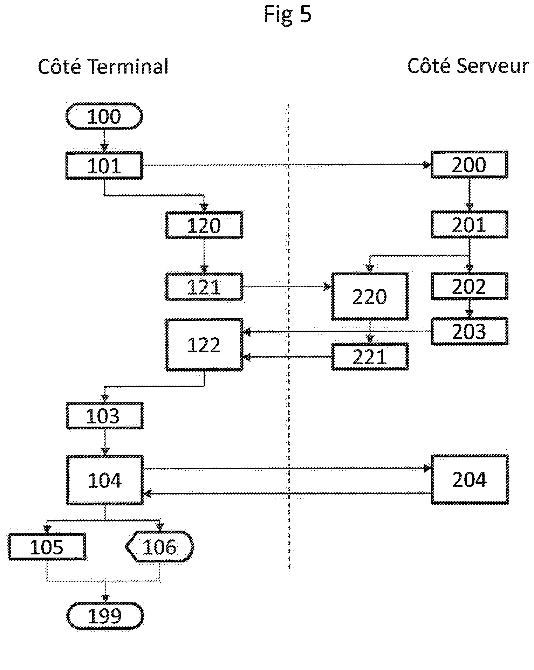

Un exemple typique d'enchainement des traitements selon l'invention est illustré par la figure 5. À l'étape 100, le processus est lancé lorsque l'utilisateur du terminal de communication saisit une URL ou clique sur un lien. À l'étape 101, le terminal de communication T construit la requête correspondante REQP et l'envoie au serveur web WS à travers le réseau de télécommunication. À l'étape 120 particulière à l'invention, le terminal de communication T utilise les métadonnées MD₁...MDₙ des éléments stockés dans la mémoire cache MC pour déterminer les éléments susceptibles d'être constitutifs de la page web demandée. À l'étape 121 particulière à l'invention, le terminal de communication T envoie au serveur WS au moyen de zéro, un, ou plusieurs messages NREQᵢ les informations représentatives des contenus des éléments susceptibles d'être constitutifs de la page web demandée, tels que ces contenus sont stockés dans la mémoire cache MC.

À l'étape 200, le serveur web WS reçoit la requête REQP et l'analyse. À l'étape 201, le serveur extrait de la base de données le modèle TEᵢ de la page web demandée. Le serveur lance ensuite en parallèle l'exécution de deux traitements, le traitement 202 et le traitement 220. À l'étape 202, à l'aide du modèle TEᵢ, le serveur construit le descriptif de la page web P. À l'étape 203, le serveur sérialise la description de la page web sous la forme d'un fichier HTML, et l'envoie au terminal de communication T à travers le réseau de télécommunication au moyen du message RESP. En parallèle, à l'étape 220 particulière à l'invention, à l'aide du modèle TEᵢ, le serveur détermine les éléments constitutifs de la page web demandée, et, en même temps, reçoit du terminal zéro, un, ou plusieurs messages NREQᵢ contenant les informations représentatives des contenus des éléments stockés dans la mémoire cache MC du terminal : à l'aide de ces informations, le serveur en déduit les éléments constitutifs de la page web pour lesquels la mémoire cache MC du terminal ne contient pas l'élément ou ne contient pas la bonne version du contenu de l'élément. À l'étape 221 particulière à l'invention, le serveur transmet au terminal les éléments qui lui manquent ou dont il n'a pas la bonne version, au moyen de zéro, un, ou plusieurs messages PUSHᵢ.

À l'étape 122 particulière à l'invention, le terminal de communication reçoit la description HTML de la page web et l'analyse, en extrayant de cette description la liste des éléments constitutifs de la page web ; et en même temps reçoit des éléments transmis par le serveur web au moyen de zéro, un, ou plusieurs messages PUSHᵢ. À l'étape 103, le terminal de communication interroge sa mémoire cache MC et en extrait les éléments constitutifs de la page web stockés en mémoire cache qu'il n'a pas déjà reçus du serveur web. Pour ce faire, le terminal de communication utilise les métadonnées associées à chaque élément stocké dans la mémoire cache, qui indiquent notamment l'URL de chaque élément. À l'étape 104, en fonction du nombre d'éléments constitutifs de la page identifiés à l'étape 122, du nombre d'éléments constitutifs de la page reçus du serveur web au moyen de messages PUSHᵢ, et du nombre d'éléments constitutifs de la page extraits de la mémoire cache à l'étape 103, le terminal de communication envoie zéro, une ou plusieurs requêtes au serveur pour obtenir les éléments manquants, et le traitement 204 du serveur lui transmet les éléments demandés. Cette étape peut ne plus être nécessaire pour les éléments fournis par le serveur web WS, mais peut être nécessaire si certains éléments, par exemple des publicités, sont fournis par un autre serveur web, auquel cas les échanges se font avec cet autre serveur web. Ces éléments une fois reçus, le terminal lance en parallèle les traitements 105 et 106. Le traitement 105 met à jour la mémoire cache avec les éléments dont il ne disposait pas déjà, ou dont il a reçu du serveur une version plus récente, et les métadonnées correspondantes, qui peuvent comprendre un code de hachage calculé à cette occasion. Le traitement 106 consiste à afficher la page web. Lorsque ces deux traitements sont terminés, le processus s'arrête à l'étape 199.

Cet enchainement des traitements selon l'invention n'est qu'un exemple.

En effet, l'introduction de traitements effectués en parallèle entre le terminal de communication et le serveur, ou à l'intérieur du serveur, entraîne un phénomène de « course de vitesse » entre les différents traitements. Par exemple, si le serveur est beaucoup plus rapide que le terminal, il peut avoir transmis le message RESP et la totalité des messages PUSHᵢ avant que le terminal n'ait transmis le premier message NREQᵢ. De même, en fonction de la vitesse relative d'exécution des différents traitements au sein du serveur web, le message RESP peut être transmis avant, pendant ou après la transmission des messages PUSHᵢ.

Bien entendu, la présente invention n'est pas limitée aux exemples et aux modes de réalisation décrits et représentés, mais elle est susceptible de nombreuses variantes accessibles à l'homme de l'art. La portée de l'invention est définie par les revendications annexées.

## Revendications

1. Procédé pour le téléchargement d'une page web depuis un serveur web (WS) vers un terminal de communication (T), comportant une première étape d'émission par ledit terminal de communication d'une requête (REQP) identifiant ladite page web, de réception de ladite requête par ledit serveur web et de détermination d'un modèle de ladite page web par ledit serveur web, ainsi qu'une seconde étape comportant
- l'analyse dudit modèle par ledit serveur web pour déterminer un ensemble d'éléments constitutifs de ladite page web, construire un descriptif de ladite page web, et envoyer ledit descriptif audit terminal de communication;
- en réponse à la détermination d'un élément, le déclenchement par ledit serveur de la transmission du contenu correspondant audit élément, chaque contenu étant transmis de façon indépendante, de sorte que le contenu de chaque élément dudit ensemble d'éléments constitutifs de ladite page web est transmis en parallèle par des canaux de transmissions respectifs,
dans lequel ledit terminal de communication (T) peut transmettre audit serveur web un message indiquant une information représentative d'un contenu disponible dans la mémoire dudit terminal de communication et contenant une date de son insertion dans ladite mémoire, et dans lequel ledit serveur web ne déclenche pas la transmission dudit contenu, ou interrompt son téléchargement en cours en fonction de ladite information et lorsque la date de la dernière modification dudit élément sur ledit serveur web est antérieure à la date contenue dans ledit message.

2. Procédé selon la revendication précédente dans lequel lesdits canaux sont conformes au protocole SPDY ou au protocole HTTP 2.0.

3. Procédé selon la revendication précédente dans lequel ladite information comprend un code résultant de l'application d'une fonction de hachage sur ledit contenu.

4. Serveur web (WS) adapté pour le téléchargement d'une page web vers un terminal de communication (T), comportant des premiers moyens pour la réception d'une requête (REQP) identifiant ladite page web et transmise par ledit terminal de communication, ainsi que des seconds moyens pour déterminer un modèle de ladite page web et analyser ledit modèle de ladite page web pour construire un descriptif de ladite page web et l'envoyer vers ledit terminal de communication, déterminer un ensemble d'éléments constitutifs de ladite page web, et, en réponse à la détermination d'un élément, pour déclencher la transmission du contenu correspondant audit élément, chaque contenu étant transmis de façon indépendante par des messages de réponse (PUSHᵢ), dans lequel lesdits seconds moyens sont prévus pour transmettre en parallèle par des canaux de transmission réceptifs, le contenu de chaque élément du dit ensemble d'éléments constitutifs de la dite page web, ledit serveur étant en outre adapté pour, suite à la réception d'un message indiquant une information représentative d'un contenu disponible dans la mémoire dudit terminal de communication et contenant une date de son insertion dans ladite mémoire, ne pas déclencher la transmission dudit contenu, ou interrompre son téléchargement en cours en fonction de ladite information et lorsque la date de la dernière modification dudit élément sur ledit serveur web est antérieure à la date contenue dans ledit message

5. Serveur web selon la revendication précédente, dans lequel ladite information comprend un code résultant de l'application d'une fonction de hachage sur ledit contenu.

6. Système comportant au moins un terminal de communication (T) et un serveur web (WS) selon l'une des revendications 4 à 5.

## Patentansprüche

1. Verfahren zum Herunterladen einer Webseite von einem Webserver (WS) auf ein Kommunikationsendgerät (T), das einen ersten Schritt eines Sendens einer Anfrage (REQP), die die Webseite identifiziert, durch das Kommunikationsendgerät, eines Empfangens der Anfrage durch den Webserver und eines Bestimmens eines Modells der Webseite durch den Webserver, sowie einen zweiten Schritt umfasst, der Folgendes umfasst:
- Analysieren des Modells durch den Webserver zum Bestimmen einer Anordnung von wesentlichen Bestandteilen der Webseite, Erstellen einer Beschreibung der Webseite und Schicken der Beschreibung an das Kommunikationsendgerät;
- als Reaktion auf das Bestimmen eines Bestandteils, Auslösen der Übertragung des Inhalts, der dem Bestandteil entspricht, durch den Server, wobei jeder Inhalt unabhängig übertragen wird, so dass der Inhalt von jedem Bestandteil der Anordnung von wesentlichen Bestandteilen der Webseite parallel durch jeweilige Übertragungskanäle übertragen wird,
wobei das Kommunikationsendgerät (T) eine Nachricht an den Webserver übertragen kann, die Informationen angibt, die einen Inhalt darstellen, der in dem Speicher des Kommunikationsendgeräts verfügbar ist und ein Datum seiner Einfügung in den Speicher enthält, und wobei der Webserver die Übertragung des Inhalts nicht auslöst oder seinen aktuellen Download in Abhängigkeit von den Informationen abbricht und wenn das Datum der letzten Änderung des Bestandteils auf dem Webserver vor dem in der Nachricht enthaltenen Datum liegt.

2. Verfahren nach dem vorhergehenden Anspruch, wobei die Kanäle dem SPDY-Protokoll oder dem HTTP-2.0-Protokoll entsprechen.

3. Verfahren nach dem vorhergehenden Anspruch, wobei die Informationen einen Code aufweisen, der sich aus der Anwendung einer Hash-Funktion auf den Inhalt ergibt.

4. Webserver (WS), der zum Herunterladen einer Webseite auf ein Kommunikationsendgerät (T) geeignet ist, der Folgendes umfasst: erste Mittel zum Empfangen einer Anfrage (REQP), die die Webseite identifiziert und durch das Kommunikationsendgerät übertragen wird, sowie zweite Mittel zum Bestimmen eines Modells der Webseite und Analysieren des Modells der Webseite zum Erstellen einer Beschreibung der Webseite und Schicken dieser an das Kommunikationsendgerät, Bestimmen einer Anordnung von wesentlichen Bestandteilen der Webseite und zum Auslösen der Übertragung des Inhalts, der dem Bestandteil entspricht, als Reaktion auf das Bestimmen eines Bestandteils, wobei jeder Inhalt unabhängig durch Antwortnachrichten (PUSHᵢ) übertragen wird, wobei die zweiten Mittel zum parallelen Übertragen des Inhalts von jedem Bestandteil der Anordnung von wesentlichen Bestandteilen der Webseite durch empfangende Übertragungskanäle vorgesehen sind, wobei der Server ferner geeignet ist, um, im Anschluss an das Empfangen einer Nachricht, die Informationen angibt, die einen Inhalt darstellen, der in dem Speicher des Kommunikationsendgeräts verfügbar ist und ein Datum seiner Einfügung in den Speicher enthält, die Übertragung des Inhalts nicht auszulösen oder seinen aktuellen Download in Abhängigkeit von den Informationen abzubrechen und wenn das Datum der letzten Änderung des Bestandteils auf dem Webserver vor dem in der Nachricht enthaltenen Datum liegt.

5. Webserver nach dem vorhergehenden Anspruch, wobei die Informationen einen Code aufweisen, der sich aus der Anwendung einer Hash-Funktion auf den Inhalt ergibt.

6. System, das wenigstens ein Kommunikationsendgerät (T) und einen Webserver (WS) nach einem der Ansprüche 4 bis 5 umfasst.

## Claims

1. Method for downloading a web page from a web server (WS) to a communication terminal (T), comprising a first step of transmission by said communication terminal of a request (REQP) which identifies said web page, receipt of said request by said web server and determination of a model of said web page by said web server, as well as a second step comprising
- the analysis of said model by said web server in order to determine a set of constituent elements of said web page, construct a description of said web page, and send said description to said communication terminal;
- in response to the determination of an element, the triggering by said server of the transmission of the content corresponding to said element, each item of content being transmitted independently such that the content of each element of said set of constituent elements of said web page is transmitted in parallel via respective transmission channels,
wherein said communication terminal (T) can transmit to said web server a message which provides information that represents an item of content available in the memory of said communication terminal and contains a date of its insertion in said memory, and wherein said web server does not trigger the transmission of said content, or interrupts its ongoing download, on the basis of said information and when the date of the last modification of said element on said web server is earlier than the date contained in said message.

2. Method according to the preceding claim, wherein said channels conform to the SPDY protocol or to the HTTP 2.0 protocol.

3. Method according to the preceding claim, wherein said information comprises a code resulting from the application of a hash function to said content.

4. Web server (WS) suitable for downloading a web page to a communication terminal (T), comprising first means for receiving a request (REQP) which identifies said web page and was transmitted by said communication terminal, as well as second means for determining a model of said web page and analyzing said model of said web page in order to construct a description of said web page and send it to said communication terminal, determining a set of constituent elements of said web page, and, in response to the determination of an element, triggering the transmission of the content corresponding to said element, each item of content being transmitted independently by response messages (PUSHᵢ), wherein said second means are provided for transmitting the content of each element of said set of constituent elements of said web page in parallel via receptive transmission channels, said server being further suitable for, following the receipt of a message which provides information that represents an item of content available in the memory of said communication terminal and contains a date of its insertion into said memory, not triggering the transmission of said content or for interrupting its ongoing download on the basis of said information and when the date of the last modification of said element on said web server is earlier than the date contained in said message.

5. Web server according to the preceding claim, wherein said information comprises a code resulting from the application of a hash function to said content.

6. System comprising at least one communication terminal (T) and a web server (WS) according to any of claims 4 to 5.
